# DEMANDE DE BREVET EUROPEEN

(11) **EP 4 769 860 A1**
(43) Date de publication de la demande: **01.07.2026**
(21) Numéro de dépôt: 25219527.6
(22) Date de dépôt: 28.11.2025
(51) Int. Cl.: H02J 1/00, H02J 4/00, H02J 7/34

(54) **SYSTEME AMELIORE D'ALIMENTATION ELECTRIQUE D'AERONEF**

(30) Priorité: 24.12.2024 FR 2415215
(71) Demandeur: AIRBUS OPERATIONS (S.A.S.), 31060 Toulouse (FR); Airbus Operations S.L., 28906 Getafe Madrid (ES)
(72) Inventeur: ALBERO, Franck, 31060 TOULOUSE (FR); DE BROUWER, Gabrielle Josephine Christiane, 28906 GETAFE MADRID (ES)
(74) Mandataire: Airbus-OPS SAS

(57) **Abrégé**

L'invention concerne un système d'alimentation électrique (PSS) d'aéronef configuré pour alimenter des dispositifs électriques embarqués (D1, D2, D3, D4, D5, D6) comprenant au moins :
- un sous-circuit électrique (HVDCN) de type haute tension à courant continu,
- un sous-circuit électrique (LPACN) de type basse tension à courant alternatif,
- un sous-circuit électrique (LPDCN) de type basse tension à courant continu,
le système (PSS) comprenant en outre un circuit de commutation de batterie (HVBATSW) à haute tension (HVBAT), le système (PSS) étant tel que toute ligne d'alimentation dudit sous-circuit basse tension à courant continu, indépendante dudit circuit de commutation (HVBATSW), est dépourvue de batterie basse tension.

Avantageusement, il est ainsi possible d'éviter une redondance de batteries préjudiciable au poids de l'aéronef (AC) et conduisant à une complexité de son système électrique.

## Description

### DOMAINE TECHNIQUE

La présente invention concerne un système amélioré d'alimentation électrique d'un aéronef comprenant notamment des circuits électriques et des batteries à haute tension à courant continu.

### ÉTAT DE LA TECHNIQUE ANTÉRIEURE

Les architectures des aéronefs évoluent, notamment dans un but de réduction substantielle des émissions de gaz carboniques. Les architectures récentes ou à venir sont alors plus électrifiées et la densité d'énergie électrique nécessaire à bord des aéronefs est bien plus importante, au sol comme en vol. Cette évolution conduit à l'utilisation de circuits électriques de type haute tension à courant continu comprenant des batteries haute tension à courant continu aptes à fournir une grande densité de courant et à alimenter électriquement de nombreux éléments d'un aéronef hybride ou électrique, dont, par exemple, des groupes motopropulseurs électriques. De nombreux circuits électriques d'aéronefs, autres que les circuits à haute tension et courant continu, sont restés conformes, pour tout ou partie, à des architectures usuelles de systèmes électriques, ce qui entraîne une certaine redondance dans l'utilisation de réservoirs d'énergie électrique de type batterie. Une telle redondance est alors préjudiciable en termes d'industrialisation, de poids, de coût, de maintenance et plus globalement de complexité des systèmes des aéronefs concernés.

La situation peut être améliorée.

### EXPOSÉ DE L'INVENTION

Un objet de la présente invention est de proposer un agencement amélioré de système électrique d'aéronef permettant de pallier au moins certains des inconvénients de l'art antérieur, notamment en évitant une redondance d'utilisation de batteries, préjudiciable notamment au poids et à une simplicité des systèmes.

A cet effet, il est proposé un système d'alimentation électrique d'aéronef configuré pour alimenter en énergie électrique des dispositifs électriques embarqués dans l'aéronef, le système comprenant au moins :
- un premier sous-circuit électrique de type haute tension à courant continu comprenant une ou plusieurs batteries à haute tension et à courant continu,
- un deuxième sous-circuit électrique de type basse tension à courant alternatif alimenté à partir dudit premier sous-circuit électrique via un ou plusieurs premiers convertisseurs de puissance électrique, et,
- un troisième sous-circuit électrique de type basse tension à courant continu, alimenté, par le deuxième sous-circuit, via un ou plusieurs deuxièmes convertisseurs de puissance électrique,
- un circuit de commutation de batterie, dans le système, de la ou des batteries à haute tension,
le système d'alimentation électrique étant tel que toute ligne d'alimentation du troisième sous-circuit, indépendante dudit circuit d'alimentation électrique dudit circuit de commutation, est dépourvue de batterie basse tension.

Il est ainsi avantageusement possible de s'affranchir de l'utilisation de batteries basse tension redondantes avec les batteries haute tension à courant continu puisque ces dernières sont en mesure de fournir l'énergie électrique précédemment apportée par les batteries basse tension à courant continu.

Le système d'alimentation électrique selon l'invention peut comprendre les caractéristiques additionnelles suivantes considérées seules ou en combinaison :
- Le troisième sous-circuit comprend une ou plusieurs composants de type super capacité.
- Le système d'alimentation électrique comprend une prise de connexion configurée pour son raccordement à une source d'énergie externe audit aéronef, éventuellement dans l'un des sous-circuits précités.
- Le premier sous-circuit électrique est configuré pour délivrer une tension continue supérieure à 300V, le deuxième sous-circuit électrique est configuré pour délivrer une tension alternative égale à 115V et le troisième sous-circuit électrique est configuré pour délivrer une tension inférieure à 50V.

Un autre objet de l'invention est un aéronef comprenant un système d'alimentation électrique tel que précédemment décrit.

### BRÈVE DESCRIPTION DES DESSINS

[Fig. 1] illustre schématiquement un système d'alimentation électrique d'aéronef selon un mode de réalisation ; et,
[Fig. 2] illustre schématiquement un aéronef comprenant un système d'alimentation électrique tel que déjà représenté sur la Fig. 1.

### EXPOSÉ DÉTAILLÉ DE MODES DE RÉALISATION

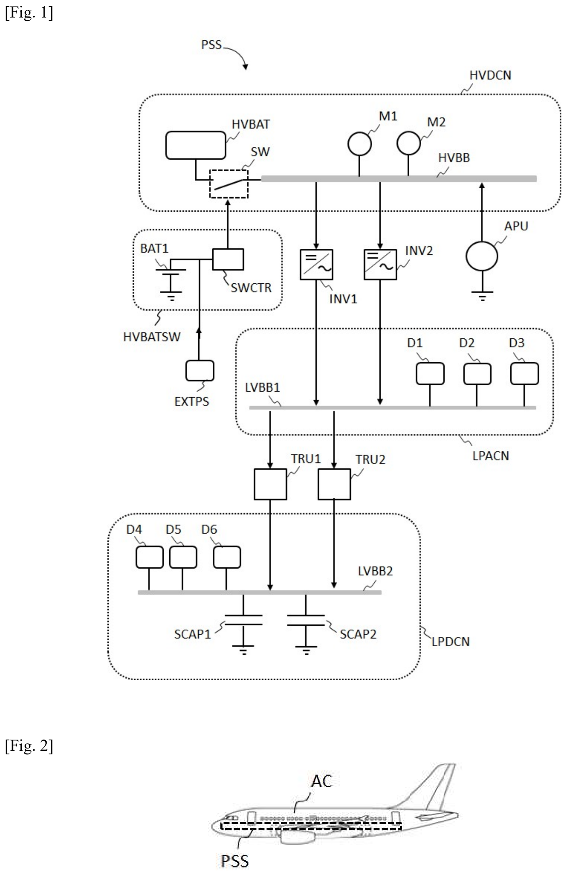

La Fig. 1 représente schématiquement un système PSS d'alimentation électrique d'un aéronef selon un mode de réalisation. Le système PSS est un système d'alimentation électrique d'un aéronef dans le sens où il est prévu pour alimenter en énergie électrique les dispositifs électriques embarqués de l'aéronef qui l'embarque. Selon l'exemple décrit, le système PSS comprend un sous-circuit électrique HVDCN de type haute tension à courant continu lequel comprend une batterie à haute tension à courant continu HVBAT configurée pour fournir de l'énergie électrique via un premier bus d'alimentation électrique HVBB. Selon un mode de réalisation, la batterie HVBAT est un ensemble de batteries à haute tension et à courant continu. Le système PSS d'alimentation électrique comprend également un sous-circuit électrique LPACN de type basse tension à courant alternatif alimenté à partir du sous-circuit électrique HVDCN, via un ou plusieurs premiers convertisseurs de puissance électrique. Selon l'exemple de réalisation illustré sur la Fig. 1, deux convertisseurs de puissance de type onduleurs INV1 et INV2 sont configurés pour opérer une génération d'une basse tension continue du réseau électrique LPACN, et une fourniture de cette tension via un deuxième bus d'alimentation électrique LVBB1. Le système PSS d'alimentation électrique comprend également un sous-circuit électrique LPDCN de type basse tension à courant continu, alimenté, par ledit sous-circuit LPACN, via un ou plusieurs deuxièmes convertisseurs de puissance électrique. Selon l'exemple de réalisation illustré sur la Fig. 1, deux convertisseurs de puissance de type transformateurs redresseurs TRU1 et TRU2 sont configurés pour opérer une génération d'une basse tension continue du réseau électrique LPACN, et une fourniture de cette tension via un troisième bus d'alimentation électrique LVBB2. Le système PSS d'alimentation électrique comprend de plus un groupe auxiliaire de puissance APU de l'aéronef embarquant le système PSS. La sortie du groupe auxiliaire de puissance APU est connectée au premier bus d'alimentation HVBB. Le système PSS comprend en outre un circuit de commutation de batterie HVBATSW configuré pour opérer une commutation ou une isolation, dans le système PSS, de la ou des batteries à haute tension HVBAT, via un commutateur SW et sous contrôle d'un dispositif de contrôle SWCTR. Selon un mode de réalisation, le circuit de commutation de batterie HVBATSW comprend une batterie BAT1 configurée pour alimenter électriquement le circuit de commutation de batterie HVBATSW. La batterie BAT1 peut être, par exemple, une batterie haute tension du sous-circuit HVDCN à haute tension et courant continu ou une batterie basse tension du sous-circuit LPDCN à basse tension et courant continu.

Le système d'alimentation électrique PSS ainsi agencé permet à la fois d'alimenter électriquement des éléments ou dispositifs électriques requérant une haute tension à courant continu, tels que, à titre d'exemples, des moto propulseurs d'aéronef M1 et M2 connectés au bus d'alimentation électrique HVBB, ainsi que des éléments ou dispositifs électriques requérant une basse tension à courant alternatif, tels que des dispositifs électriques D1, D2 et D3 connectés au bus d'alimentation électrique LVBB1 et des éléments ou dispositifs électriques requérant une basse tension à courant continu, tels que des dispositifs électriques D4, D5 et D6 connectés au bus d'alimentation électrique LVBB2. Les termes « dispositif électrique » désignent ici tout dispositif nécessitant une alimentation électrique pour opérer au moins dans certaines circonstances. Ainsi, ces termes désignent aussi bien un dispositif purement électrique, un dispositif électromécanique, un dispositif hydroélectrique, un dispositif électropneumatique, etc.

Astucieusement et avantageusement, le système d'alimentation électrique PSS est configuré et agencé de façon que toute ligne d'alimentation du sous-circuit à basse tension et courant continu, indépendante de l'alimentation électrique du circuit de commutation HVBATSW, est dépourvue de batterie.

Selon un mode de réalisation, le sous-circuit à basse tension et courant continu du système d'alimentation électrique PSS comprend une ou plusieurs super capacités configurées pour opérer un stockage d'énergie électrique. Selon l'exemple décrit, deux super capacités SCAP1 et SCAP 2 sont connectées au bus d'alimentation électrique basse tension à courant continu LVBB2 et sont dimensionnées pour pouvoir alimenter le sous-circuit LPDCN pendant une durée d'alimentation prédéterminée.

Selon des variantes de réalisation, la batterie BAT1 peut être insérée à d'autres endroits du système PSS d'alimentation électrique dès lors qu'elle est alors apte à alimenter électriquement au moins le circuit de commutation HVBATSW de batterie(s) haute.

Selon un mode de réalisation, le système PSS d'alimentation électrique comprend un raccordement ou prise d'alimentation EXTPS à une source d'alimentation électrique extérieure à l'aéronef, connectée au module de commutation HVBATSW et il est ainsi possible de s'affranchir de la batterie BAT1 pour alimenter électriquement le module de commutation HVBATSW aux fins de commuter la batterie HVBAT dans le sous circuit HVDCN.

Selon un mode de réalisation, le sous-circuit à basse tension et courant continu LPDCN est un circuit prévu pour être normalement opérationnel pendant toutes les phases de vol d'un aéronef qui l'embarque et un autre sous-circuit à basse tension et courant continu, de secours, peut être implémenté dans cet aéronef.

Selon un mode de réalisation, le sous-circuit à basse tension et courant continu LPDCN est un circuit prévu pour être opérationnel pendant dans des situations prédéfinies d'urgence en vol ou au sol et un autre sous-circuit à basse tension et courant continu, apte à opérer pendant toutes les autres phases de vol, est implémenté dans l'aéronef. Des situations prédéfinies d'urgence peuvent être, à titre d'exemples non limitatifs, une phase d'évacuation de l'appareil, une situation de panne d'un ou plusieurs éléments, etc.

Selon un mode de réalisation, le sous-circuit électrique HVDCN est configuré pour délivrer une tension continue supérieure à 300V, le sous-circuit électrique LPACN est configuré pour délivrer une basse tension alternative égale à 115V et le sous-circuit électrique basse tension à courant continu LPDCN est configuré pour délivrer une tension inférieure à 50V.

Selon un mode de réalisation, le sous-circuit électrique HVDCN est configuré pour délivrer une tension continue égale à 540 ou 800V et le sous-circuit électrique basse tension à courant continu LPDCN est configuré pour délivrer une tension égale à 28V.

La **Fig. 2** illustre schématiquement un aéronef AC comprenant avantageusement le circuit d'alimentation électrique PSS décrit ci-avant, ce qui permet d'obtenir un gain de poids, de coût, de simplicité architecturale et de logistique d'utilisation et de maintenance.

L'invention ne se limite pas aux seuls exemples et modes de réalisation décrits, mais plus généralement à tout système d'alimentation électrique d'aéronef comprenant un circuit d'alimentation électrique à basse tension et à courant continu dans lequel toute ligne d'alimentation de ce sous-circuit, indépendante d'un circuit d'alimentation d'un circuit de commutation de batterie haute tension à courant continu, est dépourvue de batterie.

## Revendications

1. Système d'alimentation électrique (PSS) d'aéronef (AC) configuré pour alimenter en énergie électrique des dispositifs électriques embarqués (D1, D2, D3, D4, D5, D6) dans ledit aéronef (AC), ledit système (PSS) comprenant au moins :
- un premier sous-circuit électrique (HVDCN) de type haute tension à courant continu comprenant une ou plusieurs batteries à haute tension et à courant continu (HVBAT),
- un deuxième sous-circuit électrique (LPACN) de type basse tension à courant alternatif alimenté à partir dudit premier sous-circuit électrique (HVDCN) via un ou plusieurs premiers convertisseurs de puissance électrique (INV1, INV2), et,
- un troisième sous-circuit électrique (LPDCN) de type basse tension à courant continu, alimenté, par ledit deuxième sous-circuit (LPACN), via un ou plusieurs deuxièmes convertisseurs de puissance électrique (TRU1, TRU2),
- le système d'alimentation électrique comprenant en outre un circuit de commutation de batterie (HVBATSW), dans ledit système (PSS) de ladite ou desdites batteries à haute tension (HVBAT), le système d'alimentation électrique (PSS) étant **caractérisé en ce que** toute ligne d'alimentation électrique dudit troisième sous-circuit, indépendante dudit circuit de commutation (HVBATSW), est dépourvue de batterie.

2. Système d'alimentation électrique (PSS) selon la revendication 1, dans lequel ledit troisième sous-circuit électrique (LPDCN) comprend une ou plusieurs composants de type super capacité (SCAP1, SCAP2).

3. Système d'alimentation électrique (PSS) selon l'une des revendications 1 et 2, dans lequel ledit premier sous-circuit électrique (HVDCN) comprend une prise de connexion (EXTPS) configurée pour son raccordement à une source d'énergie externe audit aéronef (AC) et configurée pour alimenter ledit circuit de commutation (HVBATSW).

4. Système d'alimentation électrique (PSS) selon l'une des revendications 1 à 3, dans lequel le premier sous-circuit électrique (HVDCN) est configuré pour délivrer une tension continue supérieure à 300V, le deuxième sous-circuit électrique (LPACN) est configuré pour délivrer une tension alternative égale à 115V et le troisième sous-circuit électrique (LPDCN) est configuré pour délivrer une tension inférieure à 50V.

5. Aéronef (AC) comprenant un système d'alimentation électrique (PSS) selon l'une des revendications 1 à 4.
